(19) Europäisches Patentamt
European Patent Office
Office européen des brevets

(11) **EP 2 367 853 B1**

(12) **EUROPEAN PATENT SPECIFICATION**

(45) Date of publication and mention
of the grant of the patent:
**21.11.2012  Bulletin 2012/47**

(51) Int Cl.:
*C08F 4/654* [(2006.01)]      *C08F 4/645* [(2006.01)]
*C08F 110/02* [(2006.01)]     *B01J 27/135* [(2006.01)]
*B01J 27/138* [(2006.01)]

(21) Application number: **09799318.2**

(22) Date of filing: **14.12.2009**

(86) International application number:
**PCT/EP2009/067069**

(87) International publication number:
**WO 2010/072609 (01.07.2010 Gazette 2010/26)**

(54) **CATALYST COMPONENTS FOR THE POLYMERIZATION OF OLEFINS AND CATALYSTS THEREFROM OBTAINED**

KATALYSATORKOMPONENTEN FÜR DIE POLYMERISATION VON OLEFINEN UND DARAUS ERHALTENE KATALYSATOREN

COMPOSANTS DE CATALYSEUR DESTINÉS À LA POLYMÉRISATION D'OLÉFINES ET CATALYSEURS OBTENUS À PARTIR DE CEUX-CI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.12.2008  EP 08172897**
**09.01.2009  US 204664 P**

(43) Date of publication of application:
**28.09.2011  Bulletin 2011/39**

(73) Proprietor: **Basell Poliolefine Italia S.r.l.**
**20127 Milano (IT)**

(72) Inventors:
• **BRITA, Diego**
**I-44100 Ferrara (IT)**
• **COLLINA, Gianni**
**I-44044 Ferrara (IT)**

(74) Representative: **Giberti, Stefano**
**Basell Poliolefine Italia S.r.l.**
**Intellectual Property**
**P.le G. Donegani 12**
**44100 Ferrara (IT)**

(56) References cited:
EP-A2- 0 361 598        WO-A1-00/58368
WO-A1-2009/088701       WO-A1-2010/017393

**Description**

The present invention relates to catalyst components for the polymerization of olefins $CH_2=CHR$, wherein R is hydrogen or hydrocarbon radical having 1-12 carbon atoms. In particular, the invention relates to catalyst components suitable for the preparation of homopolymers and copolymers of ethylene having a broad molecular weight distribution (MWD), and to the catalysts obtained therefrom.

In particular the present invention relates to a solid catalyst component, comprising titanium, hafnium, magnesium and halogen, in a specific molar ratio.

Furthermore, a process for preparing ethylene homopolymers and copolymers characterized by a high melt flow ratio (F/E) value, which is the ratio between the melt index measured with a 21.6 Kg load (melt index F) and the melt index measured with a 2.16 Kg load (melt index E), determined at 190°C according to ASTM D-1238 is described. Said ratio F/E is generally considered as an indication of the width of molecular weight distribution.

The MWD is a particularly important characteristic for ethylene (co) polymers, in that it affects both the rheological behavior and therefore the processability of the melt, and the final mechanical properties. Polyolefins having a broad MWD, particularly coupled with relatively high average molecular weight, are preferred in high speed extrusion processing and in blow molding, conditions in which a narrow MWD could cause melt fracture. As a consequence of this need, different methods have been developed trying to achieve this property.

One of those is the multi-step process based on the production of different molecular weight polymer fractions in single stages, sequentially forming macromolecules with different length on the catalyst particles.

The control of the molecular weight obtained in each step can be carried out according to different methods, for example by varying the polymerization conditions or the catalyst system in each step, or by using a molecular weight regulator. Regulation with hydrogen is the preferred method either working in solution or in gas phase.

A problem typically associated with the above described multistep processes is that the different polymerization conditions used in the various stages can lead to the production of not sufficiently homogenous products, especially in cases where ethylene (co)polymers with very broad molecular weight distributions are to be produced. It is in fact difficult to obtain products having a high F/E ratio, for example higher than 100, which when subjected to a transformation process, yield products with a low number of unmelt particles (gels). In order to solve or minimize this problem it would be important to have a catalyst capable of producing broad MWD polymers also in a single polymerization step.

In EP-361598 B1 an ethylene polymerization process is carried out in the presence of a catalyst component obtained by reacting a halogenated aluminum alkyl compound with the product obtained by contacting hafnium chloride, a silicon tetraalkoxide, magnesium dichloride, an alcohol and a titanium tetraalkoxide. The so obtained solid component is optionally reacted with a Lewis base selected from ethers, esters, amines, alkyl phosphates, alkyl phosphites and siloxanes. The Mg/Ti molar ratio of the final catalyst component ranges from 0.5 to 15, preferably from 2 to 6 while the Hf/Ti molar ratio ranges from 0.5 to 3 preferably from 1 to 2.5. The final molar amount of ROH with respect to Ti is in the range 1-10, preferably 3-7. When the donor is not used, the activities are substantially low and the molecular weight distribution expressed as Mw/Mn is rather broad. If the solid catalyst component, before being treated with the halogenated aluminum alkyl compound, is treated with the Lewis base it gives, under polymerization conditions, even lower activities and narrower molecular weight distribution.

In EP-501491 B1 is described a process for the preparation of a bimetallic catalyst component (containing Ti and another metal M) supported on silica and having the atomic ratios Ti:M: Mg:Si in the following ranges 1:01-3: 1-20 : 0.1-50. Preferably, the atomic ratios Ti:M:Mg are in the range 1:0.5-2:2-8. Actually, in the working examples the Mg/Ti ratios are relatively low while the final amount of Hf is not given. However, the polymerization activity is not satisfactory notwithstanding the very high pressure of ethylene in the reactor.

EP-177189 A1 describes a process for the preparation of a bimetallic catalyst component (Ti and Hf) supported on silica in which atomic ratios Mg:Hf is 0.5:1-14 and the atomic ratio Hf:Ti is 0.2:1-10. The so obtained catalyst is capable to generate ethylene polymer with a broad MWD but the activity is too low for industrial applicability.

In WO05/052010 is described the preparation of a bimetallic catalyst obtained by halogenating a precursor obtained by spray-drying an ethanol slurry of a magnesium compound, a hafnium compound and a silica carrier. In the final catalyst component the Mg/Ti molar ratio ranges from 0.5 to 10, preferably from 1 to 3, while the Ti/Hf molar ratio ranges from 0.05 to 100, preferably from 0.1 to 10. A substantially broad MWD is obtained only when the polymerization is carried out in two steps under different polymerization conditions. Moreover, the polymerization activities are not completely satisfactory.

In WO00/58368 is claimed a solid component of catalyst for the (co)polymerization of alpha-olefins, consisting of at least 95% by weight of titanium, magnesium, at least one metal selected from hafnium and zirconium, aluminium, chlorine and R-COO carboxylate in the following molar ratios: M/Ti = 0.1 - 10.0 ; Mg/Ti = 1.0 - 20.0; Al/Ti = 0.01 - 6.0; Cl/Ti = 2.0 - 70.0; R-COO/TI = 0.1 - 10.0 wherein R is an aliphatic, cycloaliphatic or aromatic hydrocarbon radical containing from 1 to 30 carbon atoms, and M is a metal selected from hafnium and zirconium or one of their mixtures characterised in that at least 80% of the titanium is in oxidation state +3 and, in addition, at least 1% of said titanium in oxidation state +3 has a tetrahedral coordination geometry.

It has now surprisingly been found a solid catalyst component which is able to produce ethylene polymers with a broad molecular weight distribution and also showing polymerization activities of interest for industrial applicability. Said catalyst component comprises Mg, Ti, Hf and halogen atoms, and, optionally, -OR groups where R is a C1-C20 hydrocarbon group, and is characterized in that (a) the Mg atoms are present in an amount higher than 7% based on the total weight of the said catalyst component, (b) the amount of

Mg, Ti, and Hf atoms is such that the Mg/Ti molar ratio ranges from 3.5 to 12 and the Hf/Ti molar ratio ranges from 0.2 to 1.2 and (c) if -OR groups are present, their amount is such that the OR/Ti molar ratio is lower than 2.

Preferably, the -OR/Ti ratio is lower than 1.5 and more preferably lower than 1.

It has been found particularly effective, in order to produce polymers with broad MWD, to use catalyst components in which the molar ratio Hf/Ti is at least 0.4, and preferably higher than 0.5 in correspondence with Mg/Ti molar ratio lower than 7 and Mg/Hf molar ratios ranging from 3 to 15.

The amount of Mg atoms in the catalyst is preferably higher than 8 %wt and more preferably ranging from 8% to 20% wt.

Preferably, the catalyst component of the invention comprises a Ti compound and a Hf compound having at least one Ti-halogen bond and a Hf-halogen bond respectively supported on magnesium chloride. The preferred titanium and hafnium compounds have the formula $M(OR^v)_nX_{y-n}$, wherein M is Ti or Hf, n is a number comprised between 0 and 1 inclusive, y is the valence of M, $R^v$ is an alkyl, cycloalkyl or aryl radical having 2-8 carbon atoms and X is halogen. In particular $R^v$ can be n-butyl, isobutyl, 2-ethylhexyl, n-octyl and phenyl; X is preferably chlorine.

The components of the invention can also comprise an electron donor compound (internal donor), selected for example among ethers, esters, amines and ketones. Preferably, the electron donor compound is selected among ethers having one or more ethers groups. Among them, particularly preferred are the diethers of formula (I)

$$R_aCR_1(OR_4)\text{-}CR_2R_3(OR_5) \qquad (I)$$

in which $R_a$, $R_1$, $R_2$ and $R_3$ are, independently, hydrogen or C1-C20 hydrocarbon groups, possibly containing heteroatoms, $R_4$ and $R_5$ are C1-C20 alkyl groups, or $R_6CO\text{-}$ groups where $R_6$ is a C1-C20 alkyl group, or they can be joined with $R_a$ and $R_3$ respectively to form a cycle. Preferably $R_a$ and/or $R_3$ are a methyl group or hydrogen or they are condensed with $R_4$ or $R_5$ respectively to form a cycle.

Preferably, in the electron donor compound of formula (I), $R_4$ and $R_5$ are methyl. Preferably, in the electron donor compound of formula (I) $R_1$ to $R_3$ are hydrogen. When $R_4$ and $R_5$ are alkyl groups they are preferably chosen among C1-C5 alkyl groups and more preferably among methyl or ethyl. Preferably they are both methyl. Among $R_6CO$ groups preferred is acetyl. Specific electron donor compounds of formula (I) are ethylene glycol diacetate, 1,2-dimethoxypropane, 1,2-diethoxypropane, methyl tetrahydrofurfuryl ether. 1,2-dimethoxypropane being the most preferred.

Another group of preferred electron donors comprises the esters of aliphatic or aromatic carboxylic acids esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate.

The electron donor compound is generally present in molar ratio with respect to the magnesium comprised between 1:4 and 1:20.

The preparation of the solid catalyst component can be carried out according to several methods. According to one of the methods the catalyst component is prepared by reacting magnesium alcoholates or chloroalcoholates (in particular chloroalcoholates prepared according to US 4,220,554) with an excess of $TiCl_4$ at a temperature of 80 to 120°C, in the presence of an amount of Hf compound, preferably $HfCl_4$, such that the weight ratio Hf compound/Mg starting compound ranges from 0.1 to 1, preferably from 0.2 to 0.8. The treatment with $TiCl_4$ can be repeated one or more times.

According to a preferred general method, the solid catalyst component can be prepared by reacting a titanium compound of the formula disclosed above with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms, in the presence of an amount of Hf compound, preferably $HfCl_4$, such that the weight ratio Hf compound/Mg starting compound ranges from 0.1 to 1, preferably from 0.2 to 0.8. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. The so obtained adduct can be directly reacted with the Ti compound or it can be previously subjected to thermally controlled dealcoholation (80-130 °C) so as to obtain an adduct in which the number of moles of alcohol is generally lower than 3 preferably between 0.1 and 2.5. The reaction with the Ti compound can be carried out for example by suspending the adduct (dealcoholated or as such) in cold $TiCl_4$ (generally 0°C) in the presence of the Hf compound; the mixture is heated up to 80-130 °C and kept at this temperature for 0.5-2 hours. The treatment with $TiCl_4$ can be carried out one or more times.

The preparation of catalyst components in spherical form is described for example in European Patent Applications EP-A-395083 and WO98/44009.

The electron donor compound can be added during the reaction with the titanium and hafnium compound or as an alternative can be added as a fresh reactant to the preformed catalyst according to the method described in WO04/106388.

The total porosity of the catalysts obtained by the last general method is generally comprised between 0.35 and 1.2 $cm^3$/g.

The surface area measured by the BET method and relative to the catalyst obtained by the last general method is generally lower than 150 and in particular comprised between 30 and 70 $m^2$/g. The porosity measured by the BET method is generally comprised between 0.1 and 0.5, preferably from 0.15 to 0.4 $cm^3$/g.

Moreover, when obtained from the last general method the particles of the solid component have substantially spherical morphology and average diameter comprised between 5 and 150 $\mu$m. As particles having substantially spherical morphology, those are meant wherein the ratio between the greater axis and the smaller axis is equal to or lower than 1.5 and preferably lower than 1.3. This allows the preparation of both components with a small average particle size (in the range of 5-20 $\mu$m, preferably 7-15 $\mu$m) useful for slurry polymerization and components with a medium large particle size (over 30 $\mu$m) particularly suitable for gas-phase polymerization. Also the particle size distribution is narrow being the SPAN of the catalyst particles- comprised between 0.7 and 1.3 preferably from 0.8 to 1.2. The SPAN being defined as the value of the ratio $\dfrac{P90 - P10}{P50}$, wherein P90 is the value of the diameter such that 90% of the total volume of particles have a diameter lower than that value; P10 is the value of the diameter such that 10% of the total volume of particles have a diameter lower than that value and P50 is the value of the diameter such that 50% of the total volume of particles have a diameter lower than that value.

The catalyst components of the invention form catalysts, for the polymerization of alpha-olefins $CH_2$=$CHR^{VIII}$ wherein $R^{VIII}$ is hydrogen or a hydrocarbon radical having 1-12 carbon atoms by reaction with organo-Al compounds, in particular Al-alkyl compounds. Among organo and Al-trialkyl compounds, for example Al-trimethyl, Al-triethyl, Al-tri-n-butyl, Al-triisobutyl and isopropyl aluminum and aluminum triisoprenyl are preferred. The Al/Ti ratio is generally comprised between 20 and 800.

In the case of the stereoregular polymerization of $\alpha$-olefins such as for example propylene and 1-butene, an electron donor compound (external donor) which can be the same or different from the compound used as internal donor is also generally used in the preparation of the catalyst.

In the case in which the internal donor is an ester of a polycarboxylic acid, in particular a phthalate, the external donor is preferably selected from the silane compounds containing at least a Si-OR link, having the formula $R^{IX}_{4-n}Si(OR^X)_n$, wherein $R^{IX}$ is an alkyl, cycloalkyl, aryl radical having 1-18 carbon atoms, $R^X$ is an alkyl radical having 1-4 carbon atoms and n is a number comprised between 1 and 3. Examples of these silanes are methyl-cyclohexyl-dimethoxysilane, diphenyl-dimethoxysilane, methyl-t-butyl-dimethoxysilane, dicyclopentyldimethoxysilane.

The spherical components of the invention and catalysts obtained therefrom find applications in the processes for the preparation of several types of olefin polymers.

For example the following can be prepared: high density ethylene polymers (HDPE, having a density higher than 0.940 g/$cm^3$), comprising ethylene homopolymers and copolymers of ethylene with alpha-olefins having 3-12 carbon atoms; linear low density polyethylene's (LLDPE, having a density lower than 0.940 g/$cm^3$) and very low density and ultra low density (VLDPE and ULDPE, having a density lower than 0.920 g/$cm^3$, to 0.880 g/$cm^3$ cc) consisting of copolymers of ethylene with one or more alpha-olefins having from 3 to 12 carbon atoms, having a mole content of units derived from the ethylene higher than 80%; elastomeric copolymers of ethylene and propylene and elastomeric terpolymers of ethylene and propylene with smaller proportions of a diene having a content by weight of units derived from the ethylene comprised between about 30 and 70%, isotactic polypropylenes and crystalline copolymers of propylene and ethylene and/or other alpha-olefins having a content of units derived from propylene higher than 85% by weight; shock resistant polymers of propylene obtained by sequential polymerization of propylene and mixtures of propylene with ethylene, containing up to 30% by weight of ethylene; copolymers of propylene and 1-butene having a number of units derived from 1-butene comprised between 10 and 40% by weight.

However, as previously indicated they are particularly suited for the preparation of broad MWD polymers and in particular of broad MWD ethylene homopolymers and copolymers containing up to 20% by moles of higher $\alpha$-olefins such as propylene, 1-butene, 1-hexene, 1-octene.

In particular the catalysts of the invention are able to give ethylene polymers, in a single polymerization step, with a broad molecular weight distribution as evidenced by the high ratio of the F/E ratio, defined as mentioned above, which in some cases are also endowed with a remarkable amount of fraction having very high molecular weight evidenced by the high value Mz/Mw ratio determined by the Gel Permeation chromatography analysis. If desired, the F/E ratio can be further increased by operating in two sequential polymerization reactors working under different conditions.

The catalysts of the invention can be used in any kind of polymerization process both in liquid and gas-phase processes. Catalysts in which the solid catalyst component has small average particle size, such as less than 30μm, preferably ranging from 5 to 20 μm, are particularly suited for slurry polymerization in an inert medium, which can be carried out continuously stirred tank reactor or in loop reactors. In a preferred embodiment the solid catalyst components having small average particle size as described are particularly suited for the use in two or more cascade loop or stirred tank reactors producing polymers with different molecular weight and/or different composition in each reactor. Catalysts in which the solid catalyst component has medium/large average particle size such as at least 30 μm and preferably ranging from 50 to 100 μm are particularly suited for gas-phase polymerization processes which can be carried out in agitated or fluidized bed gas-phase reactors.

The following examples are given in order to further describe the present invention.

The properties are determined according to the following methods:

- Porosity and surface area with nitrogen: are determined according to the B.E.T. method (apparatus used SORPTOMATIC 1900 by Carlo Erba).
- Porosity and surface area with mercury:
  The measure is carried out using a "Porosimeter 2000 series" by Carlo Erba.
  The porosity is determined by absorption of mercury under pressure. For this determination use is made of a calibrated dilatometer (diameter 3 mm) $CD_3$ (Carlo Erba) connected to a reservoir of mercury and to a high-vacuum pump ($1 \cdot 10^{-2}$ mbar). A weighed amount of sample is placed in the dilatometer. The apparatus is then placed under high vacuum (<0.1 mm Hg) and is maintained in these conditions for 20 minutes. The dilatometer is then connected to the mercury reservoir and the mercury is allowed to flow slowly into it until it reaches the level marked on the dilatometer at a height of 10 cm. The valve that connects the dilatometer to the vacuum pump is closed and then the mercury pressure is gradually increased with nitrogen up to 140 kg/cm$^2$. Under the effect of the pressure, the mercury enters the pores and the level goes down according to the porosity of the material.
  The porosity (cm$^3$/g), both total and that due to pores up to 1μm, the pore distribution curve, and the average pore size are directly calculated from the integral pore distribution curve which is function of the volume reduction of the mercury and applied pressure values (all these data are provided and elaborated by the porosimeter associated computer which is equipped with a "MILESTONE 200/2.04" program by C. Erba.
- MIE flow index: ASTM-D 1238
- MIF flow index: ASTM-D 1238
- Bulk density: DIN-53194
- Effective density: ASTM-D 792

  Mw/Mn                           determined via Gel Permeation Chromatography

## EXAMPLES

### General polymerization procedure

In A 4.0 liter stainless-steel autoclave equipped with a magnetic stirrer, temperature, pressure indicator, feeding line for ethylene, hydrogen, and a steel vial for the injection of the catalyst, was purified by fluxing pure nitrogen at 70°C for 60 minutes. It was then washed with propane, heated to 75°C and finally loaded with 1.6Litres of isohexane.

In a 100 cm$^3$ three neck glass flask were introduced in the following order, 20 cm$^3$ of anhydrous hexane, the specific amount of AlR$_3$ (aluminum triethyl or aluminum triisobutyl) used as co-catalyst and the solid catalyst as indicated in the various examples.

They were mixed together and stirred at room temperature for 5 minutes and then introduced in the reactor through the steel vial by using a nitrogen overpressure.

Thereafter, hydrogen and ethylene (7 bar of partial pressure) were introduced into the autoclave according to the conditions reported in the below table.

Under continuous stirring, the total pressure was maintained constant at 75°C for 120 minutes by feeding monomer. At the end the reactor was quickly depressurised and the temperature was dropped to 30°C. The recovered polymer was dried at 70°C under a nitrogen flow and weighted.

### Example 1

### Preparation of the solid component

The synthesis of the precursor was performed as described in Example 1 of USP4,220,554. The so obtained support has the following composition:

Mg, 20.2 wt.%
Cl, 29.8 wt.%
EtO groups 41.5 wt.%

Into a 21 glass reactor provided with stirrer, were introduced 1.21 of titanium tetrachloride and 60g of the support prepared as described above and, at temperature of 0°C, 42g of hafnium tetrachloride. The whole mixture was heated and kept under stirring for 60 minutes at a 100°C. After that stirring was discontinued and the liquid siphoned off.

After 2 washing steps with anhydrous isohexane at 55°C and other 3 washes at room temperature more, the solid component was recovered (103g).

After drying under vacuum at about 50°C, the solid showed the following characteristics:

| | | | |
|----------|------|---|-------------|
| Ti | 4.8 | % | (by weight) |
| Mg | 9.4 | % | (by weight) |
| Cl | 50.6 | % | (by weight) |
| Hf | 20.5 | % | (by weight) |
| - Solvent | 3.7 | % | (by weight) |
| - EtOH | 4.3 | % | (by weight) |

The catalyst component was used in the polymerization of ethylene according to the conditions and giving the results shown in Table 1.

### Comparative example 1

In a 500 cm$^3$ four-necked round flask equipped with a mechanical stirrer and purged with nitrogen, 220 cm$^3$ of TiCl$_4$ were charged. The temperature was set at 0°C and 15.3 g (127 mmoles. of Mg) of the solid support were slowly fed. The temperature was raised to 120 °C and the mixture was stirred for 1 hours. Then, the stirring was discontinued, the solid product was allowed to settle and the supernatant liquid was siphoned off. Said titanation procedure was repeated twice under the same conditions for 0.5 hours.

The solid was washed twice with anhydrous heptane (2 x 100 cm$^3$) at 40°C and twice at 25°C, recovered, dried under vacuum and analyzed.

The catalyst component was used in the polymerization of ethylene according to the conditions, and giving the results shown, in Table 1.

**Table 1**

| Polymerisation condition | | | | Polymerisation results | | | | |
|---------|------------------|-------------------|-------------|-------------------|------------------|------|------------------|-------|
| Example | Catalyst (mg) | Co-Cat. (type /g) | H$_2$ (bar) | Mileage (g/g) | MIE (g/10 mn) | F/E | BDP (g/cm$^3$) | Mw/Mn |
| 1 | 44.0 | TEAL/0.1 | 6.0 | 6.600 | 0.34 | 75.3 | 0.250 | 19.8 |
| 1 | 40.0 | TIBA/0.3 | 6.0 | 12.200 | 0.70 | 63.3 | 0.270 | ------ |
| Comp. 1 | 39.0 | TEAL/0.1 | 3.5 | 13.200 | 0.59 | 37.6 | 0.240 | 6.1 |
| Comp.1 | 20.0 | TIBA /0.3 | 3.5 | 20.300 | 0.60 | 40.8 | 0.256 | 8.4 |

### EXAMPLE 2

### Preparation of the spherical MgCl2-EtOH adduct

A magnesium chloride and alcohol adduct containing about 3 mols of alcohol and having average size of about 12$\mu$m was prepared following the method described in example 2 of USP 4,399,054.

### Preparation of the solid component

The spherical support, prepared according to the general method underwent a thermal treatment, under $N_2$ stream, over a temperature range of 50-150°C until spherical particles having a residual ethanol content of about 35% (1.1 mole of ethanol for each $MgCl_2$ mole) were obtained.

Into a 2 1 glass reactor provided with stirrer, were introduced 0.86L of $TiCl_4$, 60 g of the support prepared as described above and, at temperature of 0°C, 1.6g of 1,2-dimethoxypropane (1,2DMP) and 10.5g of hafnium tetrachloride. The whole mixture was heated and kept under stirring for 60 minutes at 100°C. After that, stirring was discontinued and the liquid siphoned off. Two washings with fresh isohexane (0.86L) were performed at 55°C and then, other two more hexane washings were performed at room temperature. The spherical solid component was discharged and dried under vacuum at about 50°C.

The composition of the solid was the following:

| | | | |
|---|---|---|---|
| Ti | 4.0 | % | (by weight) |
| Mg | 15.2 | % | (by weight) |
| Cl | 59.3 | % | (by weight) |
| Hf | 10.0 | % | (by weight) |
| 1,2-DMP | 0.7 | % | (by weight) |
| Solvent | 3.1 | % | (by weight) |
| EtOH | 3.5 | % | (by weight) |

The catalyst component was used in the polymerization of ethylene according to the conditions in Table 2 where also the results are shown.

### Comparative example 2

A spherical catalyst was prepared according to the same description given in the example 2 of the present document with the only exception that the hafnium compound was not used. The composition of the solid recovered was the following:

| | | | |
|---|---|---|---|
| Ti | 5.0 | % | (by weight) |
| Mg | 17.9 | % | (by weight) |
| Cl | 64.0 | % | (by weight) |
| 1,2-DMP | 1.7 | % | (by weight) |
| Solvent | 3.4 | % | (by weight) |
| EtOH | 4.1 | % | (by weight) |

The catalyst component was used in the polymerization of ethylene according to the conditions in Table 2 where also the results are shown.

**Table 2**

| Polymerization condition | | | | Polymerization results | | | | | |
|---|---|---|---|---|---|---|---|---|---|
| Catalyst (example) | Catalyst (mg) | Co-Cat. (type/g) | Hydrogen (bar) | Mileage (g/g) | MIE (g/10mn) | F/E | BDP (g/cm$^3$) | Mw/Mn | Mz/Mw |
| 4 | 10.0 | TIBA / 0.3 | 4.0 | 36.200 | 0.36 | 41.0 | 0.278 | 8.5 | 5.9 |

(continued)

| Polymerization condition | | | | Polymerization results | | | | | |
|---|---|---|---|---|---|---|---|---|---|
| Catalyst (example) | Catalyst (mg) | Co-Cat. (type/g) | Hydrogen (bar) | Mileage (g/g) | MIE (g/ 10mn) | F/E | BDP (g/cm$^3$) | Mw/Mn | Mz/Mw |
| 5 | 10.0 | TIBA / 0.3 | 4.0 | 63.700 | 0.36 | 30.2 | 0.290 | 6.9 | 5.1 |

## EXAMPLE 3

### Preparation of the spherical MgCl$_2$-EtOH adduct

A magnesium chloride and alcohol adduct containing about 3 mols of alcohol was prepared following the method described in example 2 of USP 4,399,054, but working at 2000 RPM instead of 10000 RPM.

The so obtained adduct, having average size of about $60 \mu m$ was dealcoholated up to an amount of alcohol of 25 %wt via a thermal treatment, under nitrogen stream, over a temperature range of 50-150 °C.

### Preparation of the solid component

Into a 1 1 glass reactor provided with stirrer, were introduced 0.7L of TiCl$_4$ and 35g of the support prepared as described above keeping the temperature of 0°C. The whole mixture was heated and kept under stirring for 60 minutes at 130°C. After that, stirring was discontinued and the liquid siphoned off. Fresh TiCl$_4$ (0.7L) was loaded into the glass reactor and under stirring, 8.7g of hafnium tetrachloride was added. Then the temperature was raised to 110°C and kept constant for 30'. In the end, stirring was stopped and liquid was downloaded from the reactor. Two washings with fresh isohexane (0.7L) were performed at 55°C and then, other two more hexane washings were performed at room temperature.

At this point, 0.7L of fresh isohexane was introduced. The temperature of the whole slurry was stabilized at 50°C. Using a glass funnel, 14.2g of Ethyl Acetate (EtOAc) were carefully introduced into the reactor at the same temperature. The resulting slurry was agitated for other 120'.

After the settling of the solid and the siphoning of the liquid phase, other 4 washing steps with isohexane were carried out in the same way as above described.

Later on, the spherical solid component was discharged and dried under vacuum at about 50°C. The final composition of the solid was the following:

| | | | |
|---|---|---|---|
| Ti | 3.7 | % | (by weight) |
| Mg | 11.2 | % | (by weight) |
| Cl | 45.4 | % | (by weight) |
| Hf | 7.6 | % | (by weight) |
| EtOAc | 20.4 | % | (by weight) |
| Solvent | 0.7 | % | (by weight) |
| EtOH | 1.3 | % | (by weight) |

The catalyst component was used in the polymerization of ethylene according to the conditions in Table 3 where also the results are shown.

### Comparative example 3

A spherical catalyst was prepared according to the same procedure described in example 3 with the only exception that the hafnium compound was not used.

The composition of the solid recovered was the following:

| | | | |
|---|---|---|---|
| Ti | 3.6 | % | (by weight) |
| Mg | 14.7 | % | (by weight) |
| Cl | 50.5 | % | (by weight) |
| EtOAc | 29.0 | % | (by weight) |

(continued)

| Solvent | 1.0 | % | (by weight) |
| EtOH | 0.6 | % | (by weight) |

The catalyst component was used in the polymerization of ethylene according to the conditions in Table 3 where also the results are shown.

**Table 3**

| Polymerization condition | | | | Polymerization results | | | | |
| --- | --- | --- | --- | --- | --- | --- | --- | --- |
| Catalyst (example) | Catalyst (mg) | Co-Cat. (type /g) | $H_2$ (bar) | Mileage (g/g) | MIE (g/ 10mn) | F/E | BDP (g/cm$^3$) | Mw/Mn |
| 3 | 25.0 | TIBA / 0.3 | 7 | 2.600 | 0.49 | 39.6 | 0.263 | 7.0 |
| 3 | 25.0 | TIBA / 0.3 | 8.0 | 3.500 | 1.2 | 40.5 | 0.279 | -- |
| Comp.3 | 25.0 | TIBA / 0.3 | 4.0 | 6.000 | 0.40 | 33.0 | 0.22 | -- |

## EXAMPLE 4

### Preparation of the spherical MgCl$_2$-EtOH adduct

A magnesium chloride and alcohol adduct containing about 3 mols of alcohol was prepared following the method described in example 2 of USP 4,399,054, but working at 2000 RPM instead of 10000 RPM. The spherical support, prepared according to the general method underwent a thermal treatment, under N2 stream, over a temperature range of 50-150°C until spherical particles having a residual ethanol content of about 25% (0.7 mole of ethanol for each MgCl$_2$ mole) were obtained.

### Preparation of the solid component

Into a 1.0 L glass reactor provided with stirrer, were introduced 0.40L of TiCl$_4$, 40 g of the support prepared as described above and, at temperature of 0°C, 10.0g of hafnium tetrachloride. The whole mixture was heated and kept under stirring for 60 minutes at 130°C. After that, stirring was discontinued and the liquid siphoned off. Two washings with fresh isohexane (0.86L) were performed at 55°C and then, other two more hexane washings were performed at room temperature. The spherical solid component was discharged and dried under vacuum at about 50°C.
The composition of the solid was the following:

| Ti | 6.8 | % | (by weight) |
| Mg | 13.6 | % | (by weight) |
| Cl | 59.9 | % | (by weight) |
| Hf | 10.6 | % | (by weight) |
| Solvent | 1.3 | % | (by weight) |
| EtOH | 1.4 | % | (by weight) |

The catalyst component was used in the polymerization of ethylene according to the conditions in Table 4 where also the results are shown.

### Comparative example 4

A spherical catalyst was prepared according to the same description given in the example 10 of the present document with the only exception that the Hafnium compound was not used. The composition of the solid recovered was the following:

| Ti | 6.7 | % | (by weight) |
| Mg | 18.0 | % | (by weight) |
| Cl | 65.5 | % | (by weight) |

(continued)

| Solvent | 2.7 | % | (by weight) |
| EtOH | 2.4 | % | (by weight) |

The catalyst component was used in the polymerization of ethylene according to the conditions in Table 4 where also the results are shown.

### EXAMPLE 5

### Preparation of the spherical MgCl$_2$-EtOH adduct

A magnesium chloride and alcohol adduct prepared as disclosed in example 4 was used.

### Preparation of the solid component

The spherical support, prepared according to the general method underwent a thermal treatment, under N$_2$ stream, over a temperature range of 50-150°C until spherical particles having a residual ethanol content of about 25% (0.7 mole of ethanol for each MgCl$_2$ mole) were obtained.

Into a 2.0 L glass reactor provided with stirrer, were introduced 0.8L of TiCl$_4$, 80 g of the support prepared as described above and, at temperature of 0°C, 20.0g of hafnium tetrachloride. The whole mixture was heated and kept under stirring for 60 minutes at 120°C. After that, stirring was discontinued and the liquid siphoned off. Fresh TiCl$_4$ (0.8L) was loaded into the glass reactor and the temperature was raised to 130°C and kept constant for 120'. In the end, stirring was stopped and liquid was downloaded from the reactor. Two washings with fresh isohexane (0.8L) were performed at 55°C and then, other three more hexane washings were performed at room temperature.

Later on, the spherical solid component was discharged and dried under vacuum at about 50°C. The final composition of the solid was the following:

| Ti | 3.4 | % | (by weight) |
| Mg | 15.2 | % | (by weight) |
| Cl | 61.6 | % | (by weight) |
| Hf | 11.6 | % | (by weight) |
| Solvent | 1.4 | % | (by weight) |
| EtOH | 0.2 | % | (by weight) |

### Comparative example 5

A spherical catalyst was prepared according to the same procedure described in example 5 with the only exception that the hafnium compound was not used.

The composition of the solid recovered was the following:

| Ti | 5.4 | % | (by weight) |
| Mg | 19.2 | % | (by weight) |
| Cl | 70.6 | % | (by weight) |
| Solvent | 2.1 | % | (by weight) |
| EtOH | 0.9 | % | (by weight) |

The catalyst component was used in the polymerization of ethylene according to the conditions in Table 4 where also the results are shown.

Table 4

| Polymerization condition | | | | Polymerization results | | | | | |
|---|---|---|---|---|---|---|---|---|---|
| Catalyst (example) | Cat. (mg) | Co-Cat. (typ /g) | H2 (bar) | Mileage (Kg/g) | BDP (g/cm$^3$) | MIE (g/ 10mn) | F/E | Mz/Mw | Mw/Mn |
| 4 | 15.0 | TIBA/ 0.3 | 5.0 | 12.3 | 0.362 | 0.10 | 100.0 | 8.9 | 12.5 |
| 4 | 15.0 | TIBA/ 0.3 | 8.0 | 6.6 | 0.362 | 0.26 | 74.0 | 10.6 | 18.6 |
| Comp.4 | 15.0 | TIBA/ 0.3 | 8.0 | 18.5 | 0.331 | 2.0 | 39.3 | | -- |
| 5 | 15.0 | TIBA/ 0.3 | 8.0 | 23.7 | 0.354 | 0.7 | 76.5 | 8.6 | 15.7 |
| Comp.5 | 15.0 | TIBA/ 0.3 | 8.0 | 5.3 | 0.33 | 0.2 | 60.6 | | -- |

## EXAMPLE 6

### Preparation of the spherical MgCl$_2$-EtOH adduct

A magnesium chloride and alcohol adduct containing about 3 mols of alcohol and having average size of about 12μm was prepared following the method described in example 2 of USP 4,399,054.

### Preparation of the solid component

The spherical support, prepared according to the general method underwent a thermal treatment, under N2 stream, over a temperature range of 50-150°C until spherical particles having a residual ethanol content of about 21 % (0.6 mole of ethanol for each MgCl$_2$ mole) were obtained.

Into a 2 1 glass reactor provided with stirrer, were introduced 1.0L of TiCl$_4$, 70g of the support prepared as described above and, at temperature of 0°C, 17.5g of hafnium tetrachloride. The whole mixture was heated and kept under stirring for 60 minutes at 130°C. After that, stirring was discontinued and the liquid siphoned off. Two washings with fresh isohexane (1.0L) were performed at 55°C and then, other three more hexane washings were performed at room temperature. The spherical solid component was discharged and dried under vacuum at about 50°C.

The composition of the solid was the following:

|  |  |  |  |
|---|---|---|---|
| Ti | 3.0 | % | (by weight) |
| Mg | 16.4 | % | (by weight) |
| Cl | 63.1 | % | (by weight) |
| Hf | 11.0 | % | (by weight) |
| Solvent | 2.0 | % | (by weight) |
| EtOH | 1.6 | % | (by weight) |

The catalyst component was used in the polymerization of ethylene according to the conditions in Table 5 where also the results are shown.

### Comparative example 6

A spherical catalyst was prepared according to the same description given in the example 6 with the only exception that the Hafnium compound was not used.

The composition of the solid recovered was the following:

|  |  |  |  |
|---|---|---|---|
| Ti | 4.8 | % | (by weight) |
| Mg | 20.2 | % | (by weight) |

(continued)

| | | | |
|---|---|---|---|
| Cl | 66.9 | % | (by weight) |
| Solvent | 2.0 | % | (by weight) |
| EtOH | 2.9 | % | (by weight) |

The catalyst component was used in the polymerization of ethylene according to the conditions in Table 5 where also the results are shown.

**Table 5**

| Polymerization condition | | | | Polymerization results | | | | |
|---|---|---|---|---|---|---|---|---|
| Catalyst (example) | Catalyst (mg) | Co-Cat. (type /g) | $H_2$(bar) | Mileage (g/g) | MIE (g/ 10mn) | F/E | BDP (g/cm$^3$) | |
| 6 | 8.0 | TIBA/ 0.3 | 4.0 | 30.000 | 0.12 | 65.8 | 0.290 | - |
| Comp. 6 | 8.0 | TIBA/ 0.3 | 4.0 | 59.500 | 0.3 | 39.3 | 0.300 | |

**Example 7 - Polymerization in two loop slurry process**

The catalyst prepared as described in the in example 2 was tested in a polymerization plant operating in slurry. Isobutane was used as hydrocarbon diluent for the polymerization, while ethylene, 1-hexene (to obtain a density of 0.947), hydrogen, Aluminum alkyl (triisobutylaluminum) and the above catalyst were continuously introduced into the first loop reactor.

In this first stage a copolymer was formed, then the mixture was continuously withdrawn from the first reactor and introduced into the second loop, where also ethylene and hydrogen were fed, and the polymerization was carried out therein in order to form the final desired product.

The suspension was continuously withdrawn from the second reactor and subjected to a final reduction in pressure and to steam stripping, so as to evaporate the reactants and the solvent. The composition was recovered in the form of a powder which was subjected to further drying. The specific polymerization conditions are specified in Table 6.

Resin obtained in the present embodiment resulted particularly useful for blow molding applications.

**Table 6**

| Reactor # 1 | | | | | | |
|---|---|---|---|---|---|---|
| T (°C) | $C_2$ (Kg/h) | Eff. Density (g/cm$^3$) | AlR$_3$ (type) | Cat. Mileage (g/g) | PE Int. Viscosity (dL/g) | HMW part (wt%) |
| 75 | 5.0 | 0.947 | Tiba | 12.900 | 5.4 | 50.4 |

| Reactor #2 | | | | | | |
|---|---|---|---|---|---|---|
| T (°C) | $C_2$ (Kg/h) | $C_6^-$ (g/h) | Eff. Density (g/cm$^3$) | Cat. Mileage (g/g) | PE Int. Viscosity (dL/g) | HMW part (wt%) |
| 95 | 5.2 | Absent | 0.955 | 25.600 | 3.4 | 49.6 |

**Claims**

1. Catalyst component comprising Mg, Ti, Hf, a halogen and, optionally, -OR groups where R is a C1-C20 hydrocarbon group, **characterized in that** (a) the Mg atoms are present in an amount higher than 7% based on the total weight of the said catalyst component, (b) the amount of Mg, Ti, and Hf atoms is such that the Mg/Ti molar ratio ranges from 3.5 to 12 and the Hf/Ti molar ratio ranges from 0.2 to 1.2 and (c) when - OR groups are present their amount is such that the -OR/Ti molar ratio is lower than 2.

2. The catalyst component of claim 1 in which the -OR/Ti ratio is lower than 1.5.

**3.** The catalyst component according to any of the preceding claims in which the molar ratio Hf/Ti is at least 0.4, the Mg/Ti molar ratio is lower than 7 and the Mg/Hf molar ratio ranges from 3 to 15.

**4.** The catalyst component of claim 1 in which the amount of Mg atoms in the catalyst is higher than 8 %wt.

**5.** The catalyst component of claim 1 further comprising an electron donor compound (internal donor), selected for example among ethers, esters, amines and ketones.

**6.** The catalyst component of claim 5 in which the electron donor is selected from dithers of formula (I)

$$R_0CR_1(OR_4)\text{-}CR_2R_3(OR_5) \qquad (I)$$

in which $R_a$, $R_1$, $R_2$ and $R_3$ are, independently, hydrogen or C1-C20 hydrocarbon groups, possibly containing heteroatoms, $R_4$ and $R_5$ are C1-C20 alkyl groups, or $R_6$CO- groups where $R_6$ is a C1-C20 alkyl group, or they can be joined with $R_a$ and $R_3$ respectively to form a cycle.

**7.** A catalyst system for the polymerization of olefins obtained by reacting a solid catalyst component according to any one of the preceding claims with Al-alkyl compounds.

**Patentansprüche**

**1.** Katalysatorkomponente, umfassend Mg, Ti, Hf, ein Halogen und, gegebenenfalls, -OR-Gruppen, wobei R eine $C_1$- bis $C_{20}$-Kohlenwasserstoffgruppe ist, die **dadurch gekennzeichnet ist, dass** (a) die Mg-Atome in einer höheren Menge als 7 % bezogen auf das Gesamtgewicht der Katalysatorkomponente vorliegen, (b) die Menge von Mg-, Ti- und Hf-Atomen dergestalt ist, dass das Molverhältnis von Mg : Ti im Bereich von 3,5 bis 12 liegt und das Molverhältnis von Hf : Ti im Bereich von 0,2 bis 1,2 liegt und (c) wenn -OR-Gruppen vorliegen, ihre Menge dergestalt ist, dass das Molverhältnis von -OR : Ti niedriger als 2 ist.

**2.** Katalysatorkomponente nach Anspruch 1, wobei das Molverhältnis von -OR : Ti niedriger als 1,5 ist.

**3.** Katalysatorkomponente nach einem der vorangehenden Ansprüche, wobei das Molverhältnis von Hf: Ti mindestens 0,4 beträgt, das Molverhältnis von Mg : Ti niedriger als 7 ist und das Molverhältnis von Mg : Hf im Bereich von 3 bis 15 liegt.

**4.** Katalysatorkomponente nach Anspruch 1, wobei die Menge der Mg-Atome im Katalysator höher als 8 Gew.-% ist.

**5.** Katalysatorkomponente nach Anspruch 1, die ferner eine Elektronendonatorverbindung (einen internen Donator) umfasst, die zum Beispiel unter Ethern, Estern, Aminen und Ketonen ausgewählt ist.

**6.** Katalysatorkomponente nach Anspruch 5, wobei der Elektronendonator aus Diethern der Formel (I)

$$R_aCR_1(OR_4)\text{-}CR_2R_3(OR_5) \qquad (I)$$

ausgewählt ist, wobei $R_a$, $R_1$, $R_2$ und $R_3$, unabhängig, Wasserstoff oder $C_1$- bis $C_{20}$-Kohlenwasserstoffgruppen sind, die gegebenenfalls Heteroatome enthalten, $R_4$ und $R_5$ $C_1$- bis $C_{20}$-Alkylgruppen oder $R_6$CO-Gruppen sind, wobei $R_6$ eine $C_1$- bis $C_{20}$-Alkylgruppe ist, oder sie mit $R_a$ bzw. $R_3$ zur Bildung eines Zyklus miteinander verbunden sein können.

**7.** Katalysatorsystem zur Polymerisation von Olefinen, das durch zur Reaktion bringen einer festen Katalysatorkomponente nach einem der vorangehenden Ansprüche mit Al-Alkylverbindungen erhalten wird.

**Revendications**

**1.** Composant catalytique comprenant Mg, Ti, Hf, un halogène et, éventuellement, des groupes -OR, R représentant un groupe hydrocarboné en C1-C20, **caractérisé en ce que** (a) les atomes de Mg sont présents en un quantité supérieure à 7% sur base du poids total dudit composant catalytique, (b) la quantité des atomes de Mg, de Ti et de Hf est telle que le rapport molaire Mg/Ti se situe dans la plage de 3,5 à 12 et le rapport molaire Hf/Ti se situe dans la plage de 0,2 à 1,2 et (c) quand des groupes -OR sont présents, leur quantité est telle que le rapport molaire-OR/Ti est inférieur à 2.

2. Composant catalytique selon la revendication 1, le rapport OR/Ti étant inférieur à 1,5.

3. Composant catalytique selon l'une quelconque des revendications précédentes, le rapport molaire Hf/Ti étant d'au moins 0,4, le rapport molaire Mg/Ti étant inférieur à 7 et le rapport molaire Mg/Hf se situant dans la plage de 3 à 15.

4. Composant catalytique selon la revendication 1, la quantité d'atomes de Mg dans le catalyseur étant supérieure à 8% en poids.

5. Composant catalytique selon la revendication 1, comprenant en outre un composé donneur d'électrons (donneur interne), choisi par exemple parmi les éthers, les esters, les amines et les cétones.

6. Composant catalytique selon la revendication 5, le donneur d'électrons étant choisi parmi les diéthers de formule (I)

$$R_aCR_1(OR_4)\text{-}CR_2R_3(OR_5) \qquad (I)$$

dans laquelle $R_a$, $R_1$, $R_2$ et $R_3$ représentent indépendamment hydrogène ou des groupes hydrocarbonés en C1-C20, contenant éventuellement des hétéroatomes, $R_4$ et $R_5$ représentent des groupes alkyle en C1-C20, ou de groupes $R_6CO\text{-}$, $R_6$ représentant un groupe alkyle en C1-C20 ou ils peuvent être liés avec respectivement $R_a$ et $R_3$ pour former un cycle.

7. Système catalytique pour la polymérisation d'oléfines obtenu par réaction d'un composant catalytique solide selon l'une quelconque des revendications précédentes avec des composés Al-alkyle.

**EP 2 367 853 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 361598 B1
- EP 501491 B1
- EP 177189 A1
- WO 05052010 A
- WO 0058368 A
- US 4220554 A
- EP 395083 A
- WO 9844009 A
- WO 04106388 A
- US P4220554 A
- US P4399054 A